# EUROPEAN PATENT APPLICATION

(11) **EP 4 525 142 A1**
(43) Date of publication of application: **19.03.2025**
(21) Application number: 23220671.4
(22) Date of filing: 29.12.2023
(51) Int. Cl.: H01M 10/643, H01M 10/6555, H01M 10/6557, H01M 10/6565, H01M 50/213

(54) **LIQUID COOLING SYSTEM AND BATTERY SYSTEM**

(30) Priority: 15.09.2023 CN 202322519604 U
(71) Applicant: Eve Energy Co., Ltd., Huizhou, Guangdong 516006 (CN)
(72) Inventor: LIU, Xuelin, Huizhou, 516006 (CN); FENG, Yanqiang, Huizhou, 516006 (CN); ZHAO, Yuhang, Huizhou, 516006 (CN)
(74) Representative: Nederlandsch Octrooibureau

(57) **Abstract**

A liquid cooling system and a battery module are provided. The liquid cooling system includes: a housing, a battery cell module, and a liquid cooling assembly. The battery cell module includes multiple battery cells, the battery cell module being disposed in an inner cavity of the housing. The liquid cooling assembly includes one or more coolant conveying pipes and one or more liquid cooling pipes. Each of the coolant conveying pipe is communicated with one of the liquid cooling pipes. An arc concave surface is formed on one of the liquid cooling pipes. The arc concave surface matches an outer side surface of one of the battery cells, and is connected to the outer side surface of one of the battery cells. A thermally conductive double-sided adhesive tape is provided at a connection position between the arc concave surface and one of the battery cells.

## Description

### FIELD

The present disclosure relates to the field of battery technologies, and specifically, to a liquid cooling system and a battery module.

### BACKGROUND

Lithium batteries gradually become a most important power source for development of new energy because of advantages such as high power density, high energy density, and long service life. Power provided by a single battery cell is limited. To provide high power, individual battery cells need to be connected in series and (or) in parallel to form a battery module, so as to achieve a specific voltage level and capacity level to meet requirements for voltage and power. However, a problem of too high temperature caused by heat generation generally exists in a battery module formed by multiple battery cells connected together.

A technical solution to solve a problem of too much heat generation of a battery module is usually to use liquid cooling pipe to cool an outer side of a battery cell. Polyurethane-based thermally conductive adhesive or acrylic liquid adhesive is usually used for fixation and thermal conduction between a liquid cooling pipe and a battery cell. However, a coating process of these adhesives is complicated, and a problem of adhesive overflow exists. This causes a great impact on production of battery modules.

### SUMMARY

According to one or more embodiments of the present disclosure, a liquid cooling system includes: a housing; a battery cell module including multiple battery cells, the battery cell module being disposed in an inner cavity of the housing; and a liquid cooling assembly provided inside the housing, the liquid cooling assembly including one or more coolant conveying pipes and one or more liquid cooling pipes, each of the coolant conveying pipe being communicated with one of the liquid cooling pipes, an outer side surface of at least one of the liquid cooling pipes being an arc concave surface, the arc concave surface matching an outer side surface of one of the battery cells, the arc concave surface being connected to the outer side surface of one of the battery cells, a thermally conductive double-sided adhesive tape being provided at a connection position between the arc concave surface and one of the battery cells, and a thickness of the thermally conductive double-sided adhesive tape ranging from 0.01 mm to 10 mm.

According to one or more embodiments, the thermally conductive double-sided adhesive tape is a solid flexible adhesive tape, a side of the thermally conductive double-sided adhesive tape is adhered to the arc concave surface, another side of the thermally conductive double-sided adhesive tape is adhered to part of the outer side surface of one of the battery cells, and the thermally conductive double-sided adhesive tape has a thermal conductivity greater than 1 W/mK and a bonding strength greater than 0.9 megapascal.

According to one or more embodiments, the one or more coolant conveying pipes includes two coolant conveying pipes, and the one or more liquid cooling pipes includes two coolant conveying pipes, the two coolant conveying pipes are respectively provided on two sides of the battery cell module, the two liquid cooling pipes are respectively provided on two sides of one of the battery cells, and the two liquid cooling pipes are respectively communicated with the two coolant conveying pipes.

According to one or more embodiments, the liquid cooling assembly further includes one or more first port connectors, one of the first port connectors is disposed at a connection position between one of the liquid cooling pipes and one of the coolant conveying pipes, one of the liquid cooling pipes is communicated with one of the coolant conveying pipes through one of the first port connectors, and the liquid cooling pipes and the first port connectors are made of plastic.

According to one or more embodiments, one of the coolant conveying pipes includes a liquid inlet pipe and a liquid outlet pipe, the liquid inlet pipe and the liquid outlet pipe are disposed on a side of the battery cell module, the liquid inlet pipe and the liquid outlet pipe are communicated with one of the liquid cooling pipes through one of the first port connectors, and the liquid inlet pipe and the liquid outlet pipe are connected to an end of one of the liquid cooling pipes.

According to one or more embodiments, one of the first port connectors is connected to a first end of one of the liquid cooling pipes, the liquid cooling assembly further includes one or more second port connectors, one of the second port connectors is connected to a second end of one of the liquid cooling pipes, a first coolant channel and a second coolant channel are provided inside one of the liquid cooling pipes, the first coolant channel is communicated with the liquid inlet pipe through one of the first port connectors, the second coolant channel is communicated with the liquid outlet pipe through one of the first port connectors, and the first coolant channel and the second coolant channel are communicated at the second end of one of the liquid cooling pipes through one the second port connectors.

According to one or more embodiments, the liquid inlet pipe and the liquid outlet pipe are a corrugated pipe, and the liquid inlet pipe and the liquid outlet pipe are in an interference fit with one of the first port connectors.

According to one or more embodiments, the liquid cooling system further includes a battery disconnect unit, the battery disconnect unit is provided in the inner cavity of the housing and is electrically connected to one of the battery cells, the liquid cooling assembly further includes a liquid cooling plate, the liquid cooling plate is provided on a top of the battery disconnect unit, and the liquid cooling plate is communicated with one of the coolant conveying pipes.

According to one or more embodiments, the liquid cooling assembly further includes a thermally conductive insulating part, the liquid cooling plate is provided on the battery disconnect unit by the thermally conductive insulating part, and the thermally conductive insulating part is in contact with the liquid cooling plate and the battery disconnect unit.

According to one or more embodiments, the thermally conductive insulating part is made of silica gel, the liquid cooling plate is made of metal, and one of the coolant conveying pipes is welded to the liquid cooling plate.

According to one or more embodiments of the present disclosure, a battery system includes: a liquid cooling system, the liquid cooling system including a housing, a battery cell module, and a liquid cooling assembly, the battery cell module including multiple battery cells, the battery cell module being provided in an inner cavity of the housing, the liquid cooling assembly being provided inside the housing, the liquid cooling assembly including one or more coolant conveying pipes and one or more liquid cooling pipes, one of the coolant conveying pipes being communicated with one of the liquid cooling pipes, an arc concave surface being formed on one of the liquid cooling pipes, the arc concave surface matching an outer side surface of one of the battery cells, the arc concave surface being connected to the outer side surface of one of the battery cells, a thermally conductive double-sided adhesive tape being provided at a connection position between the arc concave surface and one of the battery cells, and a thickness of the thermally conductive double-sided adhesive tape ranging from 0.01 mm to 10 mm; a battery cell connection system provided on a top of the battery cell module and electrically connected to one of the battery cells; and a battery cell control system provided in the inner cavity of the housing and electrically connected to one of the battery cells.

According to one or more embodiments, the thermally conductive double-sided adhesive tape is a solid flexible adhesive tape, a side of the thermally conductive double-sided adhesive tape is adhered to the arc concave surface, another side of the thermally conductive double-sided adhesive tape is adhered to part of the outer side surface of one of the battery cells, and the thermally conductive double-sided adhesive tape has a thermal conductivity greater than 1 W/mK and a bonding strength greater than 0.9 megapascal.

According to one or more embodiments, the liquid cooling assembly includes two coolant conveying pipes and two liquid cooling pipes, the two coolant conveying pipes are respectively provided on two sides of the battery cell module, the two liquid cooling pipes are respectively provided on two sides of one of the battery cells, and the two liquid cooling pipes are respectively communicated with the two coolant conveying pipes.

According to one or more embodiments, the liquid cooling assembly further includes one or more first port connectors, one of the first port connectors is disposed at a connection position between one of the liquid cooling pipes and one of the coolant conveying pipes, one of the liquid cooling pipes is communicated with one of the coolant conveying pipes through one of the first port connectors, and the liquid cooling pipes and the first port connectors are made of plastic.

According to one or more embodiments, one of the coolant conveying pipes includes a liquid inlet pipe and a liquid outlet pipe, the liquid inlet pipe and the liquid outlet pipe are disposed on a same side of the battery cell module, the liquid inlet pipe and the liquid outlet pipe are communicated with one of the liquid cooling pipes through one of the first port connectors, and the liquid inlet pipe and the liquid outlet pipe are connected to a same end of one of the liquid cooling pipes.

According to one or more embodiments, one of the first port connectors is connected to a first end of one of the liquid cooling pipes, the liquid cooling assembly further includes one or more second port connectors, one of the second port connectors is connected to a second end of one of the liquid cooling pipes, a first coolant channel and a second coolant channel are provided inside one of the liquid cooling pipes, the first coolant channel is communicated with the liquid inlet pipe through one of the first port connectors, the second coolant channel is communicated with the liquid outlet pipe through one of the first port connectors, and the first coolant channel and the second coolant channel are communicated at the second end of one of the liquid cooling pipes through one the second port connectors.

According to one or more embodiments, the liquid inlet pipe and the liquid outlet pipe are a corrugated pipe, and the liquid inlet pipe and the liquid outlet pipe are in an interference fit with one of the first port connectors.

According to one or more embodiments, the liquid cooling system further includes a battery disconnect unit, the battery disconnect unit is provided in the inner cavity of the housing and is electrically connected to each of the battery cells, the liquid cooling assembly further includes a liquid cooling plate, the liquid cooling plate is provided on a top of the battery disconnect unit, and the liquid cooling plate is communicated with one of the coolant conveying pipes.

According to one or more embodiments, the liquid cooling assembly further includes a thermally conductive insulating part, the liquid cooling plate is provided on the battery disconnect unit by the thermally conductive insulating part, and the thermally conductive insulating part is in contact with the liquid cooling plate and the battery disconnect unit.

According to one or more embodiments, the thermally conductive insulating part is made of silica gel, the liquid cooling plate is made of metal, and one of the coolant conveying pipes is welded to the liquid cooling plate.

### BRIEF DESCRIPTION OF THE DRAWINGS

FIG. 1 is a schematic diagram of an exploded structure of a battery module including a liquid cooling system according to one or more embodiments of the present disclosure.
FIG. 2 is a schematic diagram of a connection relationship between a battery cell module, a battery cell control system, a pressure relief valve, and a liquid cooling assembly in the battery module shown in FIG. 1 assembled together.
FIG. 3 is a schematic diagram of a connection relationship between a battery cell, a liquid cooling pipe, and a thermally conductive double-sided adhesive tape of the liquid cooling system in the battery module shown in FIG. 1.
FIG. 4 is a schematic diagram of a connection relationship between the liquid cooling pipe and a coolant conveying pipe of the liquid cooling system in the battery module shown in FIG. 1.
FIG. 5 is a partially enlarged view of section A in FIG. 4.
FIG. 6 is a partially enlarged view of section B in FIG. 4.
FIG. 7 is a schematic diagram of the liquid cooling pipe shown in FIG. 1.
FIG. 8 is a schematic diagram of a connection structure of a liquid cooling pipe and a first port connector of the liquid cooling system in the battery module shown in FIG. 1.
FIG. 9 is a schematic diagram of a connection structure of a liquid cooling pipe and a second port connector of the liquid cooling system in the battery module shown in FIG. 1.

### Reference numerals:

100: housing;
200: battery cell module; 201: battery cell;
300: battery cell connection system;
400: battery disconnection unit;
500: battery cell control system;
600: liquid cooling assembly; 610: coolant conveying pipe; 611: liquid inlet pipe; 612: liquid outlet pipe; 620: liquid cooling pipe; 621: arc concave surface; 622: first coolant channel; 623: second coolant channel; 630: thermally conductive double-sided adhesive tape; 640: liquid cooling plate; 650: thermally conductive insulating part; 660: first port connector; 670: second port connector;
700: module tray;
800: second structural adhesive; and
900: pressure relief valve.

### DETAILED DESCRIPTION

The following clearly and completely describes the technical solutions in the embodiments of the present disclosure with reference to the accompanying drawings in one or more embodiments of the present disclosure. Apparently, the described embodiments are merely some but not all of the embodiments of the present disclosure. All other embodiments obtained by those skilled in the art according to the embodiments of the present disclosure without creative efforts shall fall within the scope of the present disclosure. In addition, it should be understood that the specific implementations described herein are merely used to describe and explain the present disclosure, but are not intended to limit the present disclosure. In the present disclosure, without contrary explanation, position words, such as "up", "down", "left", and "right" used generally refer to up, down, left and right of a device in actual use or in a working state, specifically a drawing direction in the accompanying drawings.

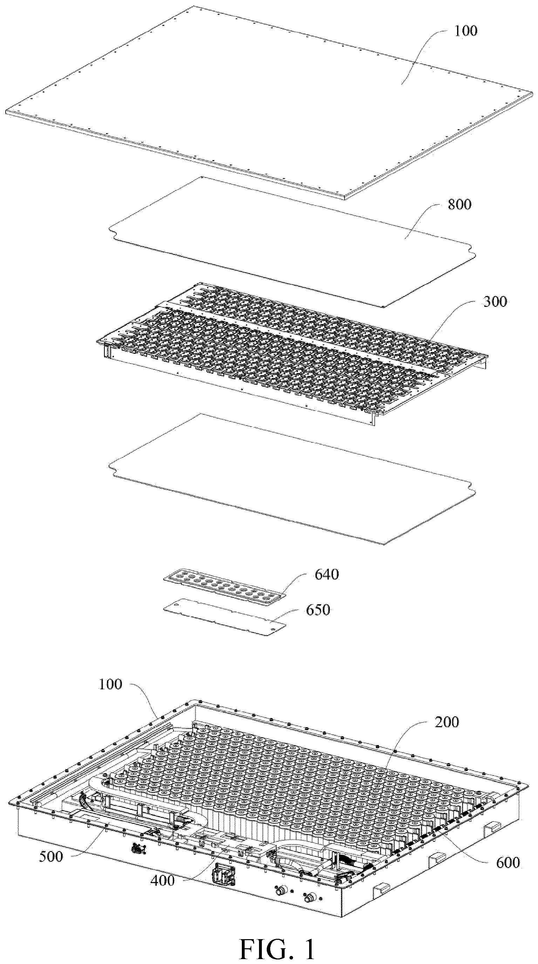

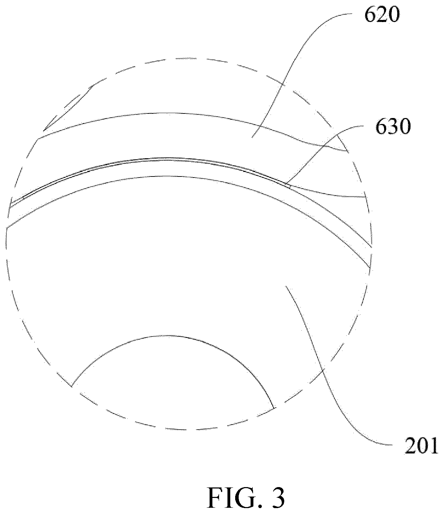

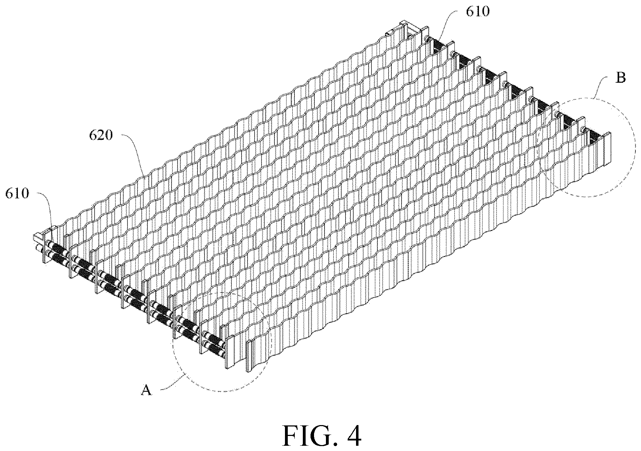

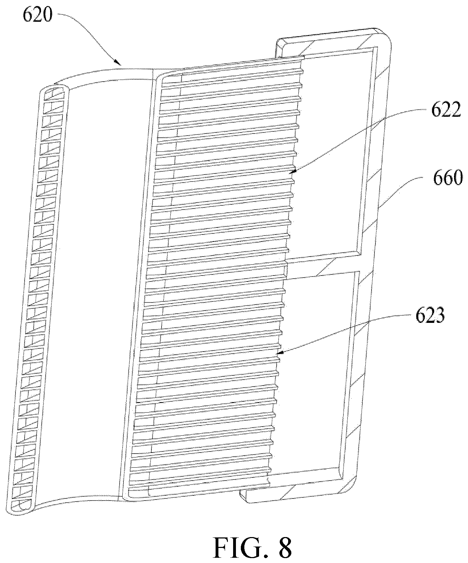

Referring to FIGS. 1 to 9, a liquid cooling system according to one or more embodiments of the present disclosure includes a housing 100, a battery cell module 200, and a liquid cooling assembly 600. The battery cell module 200 includes multiple battery cells 201. The battery cell module 200 is installed in an inner cavity of the housing 100. The liquid cooling assembly 600 is installed inside the housing 100. The liquid cooling assembly 600 includes a coolant conveying pipe 610 and a liquid cooling pipe 620. The coolant conveying pipe 610 is communicated with the liquid cooling pipe 620. An outer side surface of the liquid cooling pipe 620 is an arc concave surface 621. The arc concave surface 621 matches with an outer side surface of the battery cell 201, and the arc concave surface 621 is connected to the outer side surface of the battery cell 201. A thermally conductive double-sided adhesive tape is provided at a connection position between the arc concave surface 621 and the battery cell 201. A thickness of the thermally conductive double-sided adhesive tape ranges from 0.01 mm to 10 mm.

In one or more embodiments of the present disclosure, the thickness of the thermally conductive double-sided adhesive tape 630 ranges from 0.05 mm to 5 mm.

In one or more embodiments of the present disclosure, the thickness of the thermally conductive double-sided adhesive tape 630 ranges from 0.1 mm to 1 mm.

In one or more embodiments of the present disclosure, the thickness of the thermally conductive double-sided adhesive tape 630 ranges from 0.10 mm to 0.20 mm.

In one or more embodiments of the present disclosure, the thickness of the thermally conductive double-sided adhesive tape 630 includes 0.10 mm, 0.11mm, 0.12mm, 0.13mm, 0.14mm, 0.15mm, 0.16mm, 0.17mm, 0.18mm, 0.19mm, or 0.20mm.

In the present disclosure, the thermally conductive double-sided adhesive tape 630 is provided between the arc concave surface 621 of the liquid cooling pipe 620 and the battery cell 201. Firmness and closeness of fitting between the liquid cooling pipe 620 and the battery cell 201 are improved. This ensures that the liquid cooling pipe 620 is adhered to the outer side surface of the battery cell 201, to improve cooling efficiency of the battery cell 201. This can further ensure firm assembly of the battery cell 201 in the liquid cooling system. In addition, by using the thermally conductive double-sided adhesive tape 630, procedures of application and solidification of adhesive in a production process are not required. This can effectively prevent a problem of adhesive overflow in the production process and prevent a problem of a difficulty in cleaning adhesives after the liquid cooling system is contaminated by the adhesive. The thermally conductive double-sided adhesive tape 630 is used for bonding. This cancels steps of application and solidification of adhesive in the production process, improves production efficiency, reduces a quantity of devices used in the production process, and reduces production cost.

In addition, in the present disclosure, the thickness of the thermally conductive double-sided adhesive tape 630 is small. This can ensure tight adhesion between the liquid cooling pipe 620 and the battery cell 201, reduce a gap between the liquid cooling pipe 620 and the battery cell 201, and further reduce space occupied by an internal structure of the battery module. This facilitates size reduction of the battery module. As a solid adhesive tape, it is more convenient to control the thickness of the thermally conductive double-sided adhesive tape 630 than that of a liquid adhesive tape. In the production process of the battery module, problems of overflow and lack of adhesive do not exist. This prevents a problem of difficulty in cleaning adhesives after the battery module is contaminated by a liquid adhesive. A procedure of addition of adhesive does not need to be increased additionally, thereby improving production efficiency of the battery module.

The thermally conductive double-sided adhesive tape is solid adhesive tape. The thickness of the thermally conductive double-sided adhesive tape may be adjusted by pre-cutting, to meet a spacing requirement between the liquid cooling pipe 620 and the battery cell 201.

In one or more embodiments of the present disclosure, the thermally conductive double-sided adhesive tape 630 is a solid flexible adhesive tape. A side of the thermally conductive double-sided adhesive tape 630 is adhered to the arc concave surface 621, and another side is adhered to part of the outer side surface of the battery cell 201.

The thermally conductive double-sided adhesive tape 630 has a thermal conductivity coefficient greater than 1 W/mK and a bonding strength greater than 0.9 MPa. The thermally conductive double-sided adhesive tape 630 is resistant to a high temperature of 150°C, and performance attenuation of the thermally conductive double-sided adhesive tape 630 is less than 5% after long-term use under an environment of -40°C to 60°C.

In one or more embodiments of the present disclosure, the housing 100 is provided with an inner cavity. The liquid cooling system further includes a Battery Disconnect Unit (BDU) 400. The BDU 400 is installed in the inner cavity of the housing 100 and is electrically connected to the battery cell 201. The liquid cooling assembly 600 further includes a liquid cooling plate 640. The liquid cooling plate 640 is fixed on a top of the BDU 400. The liquid cooling plate 640 is communicated with the coolant conveying pipe 610.

The BDU 400 is configured to control processes of power off and on, pre-charging, and charging of a high-voltage electrical loop.

Specifically, the liquid cooling plate 640 cools the BDU 400. A problem of a too high temperature of the BDU 400 during operation is prevented, and an overcurrent requirement of another electronic component in the battery module is reduced. In this way, a volume of an electronic component in the battery module is reduced and production cost of the battery module is reduced. The coolant conveying pipe 610 performs heat-absorption on the battery cell 201 by the liquid cooling pipe 620, and also performs heat-absorption on the BDU 400.

As shown in FIG. 1, in one or more embodiments of the present disclosure, the liquid cooling assembly 600 further includes a thermally conductive insulating part 650. The liquid cooling plate 640 is fixed on the BDU 400 through the thermally conductive insulating part 650. The thermally conductive insulating part 650 contacts with the liquid cooling plate 640 and the BDU 400.

In one or more embodiments of the present disclosure, the thermally conductive insulating part 650 can fix a relative position between the liquid cooling plate 640 and the BDU 400, to prevent moving of the liquid cooling plate 640. This ensures that heat of the BDU 400 can be conducted to the liquid cooling plate 640 by the thermally conductive insulating part 650, and ensures cooling effect of the BDU 400 and stability and reliability of the internal structure of the battery module.

In one or more embodiments of the present disclosure, the thermally conductive insulating part 650 is made of silica gel. The liquid cooling plate 640 is made of metal. The coolant conveying pipe 610 are welded to the liquid cooling plate 640.

The liquid cooling plate 640 is made of metal aluminum. The liquid cooling plate 640 has good thermally conductive effect. In one or more embodiments of the present disclosure, the thermally conductive insulating part 650 made of silica gel is provided between the liquid cooling plate 640 and the BDU 400, so that the liquid cooling plate 640 is insulated from the BDU 400, and an additional insulation coating does not need to be provided on an outer side surface of the liquid cooling plate 640.

Specifically, in one or more embodiments of the present disclosure, the thermally conductive insulating part 650 made of silica gel is used to withstand a certain amount of elastic deformation. The thermally conductive insulating part 650 can insulate the metal liquid cooling plate 640 from the BDU 400, and fix a position of the liquid cooling plate 640. In addition, the thermally conductive insulating part 650 can further play a buffering role for collision between the liquid cooling plate 640 and the BDU 400 due to vibration when the battery module is transported or collided by external forces. This improves the safety and reliability of the battery module, and improves integrity of the internal structure of the battery module. In addition, the liquid cooling plate 640 is connected to the coolant conveying pipe 610 by welding, so that firmness of the liquid cooling plate 640 can be improved.

In one or more embodiments of the present disclosure, the liquid cooling plate 640 is formed by connecting a bottom plate to a top punching plate by brazing welding.

As shown in FIGS. 1, 2 and 4, in one or more embodiments of the present disclosure, two coolant conveying pipes 610 are respectively provided on two sides of the battery cell module 200. Two liquid cooling pipes 620 are respectively provided on two sides of the battery cell 201. Two liquid cooling pipes 620 respectively on two sides of a same battery cell 201 are respectively communicated with the two coolant conveying pipe 610.

In one or more embodiments of the present disclosure, the coolant conveying pipes 610 are distributed on two sides of the battery cell module, and the two coolant conveying pipes 610 respectively deliver coolant to two liquid cooling pipe 620 respectively on two sides of each battery cell 201, so that the coolant respectively on two sides of the battery cell 201 can respectively come from different coolant conveying pipes 610. This improves efficiency of heat absorption of the liquid cooling pipes 620 to the battery cell 201.

In one or more embodiments of the present disclosure, a side of the battery cell 201 disposed in a same column is adhered to a same liquid cooling pipe 620. Outer side surfaces of each column of battery cells 201 are adhered to two liquid cooling pipe 620. Two liquid cooling pipes 620 disposed on the outer side surface of the battery cell 201 in a same column are respectively communicated with the two coolant conveying pipes 610. This makes full use of space of the inner cavity of the housing 100, and the liquid cooling assembly 600 in the housing 100 has a reasonable layout and a compact structure.

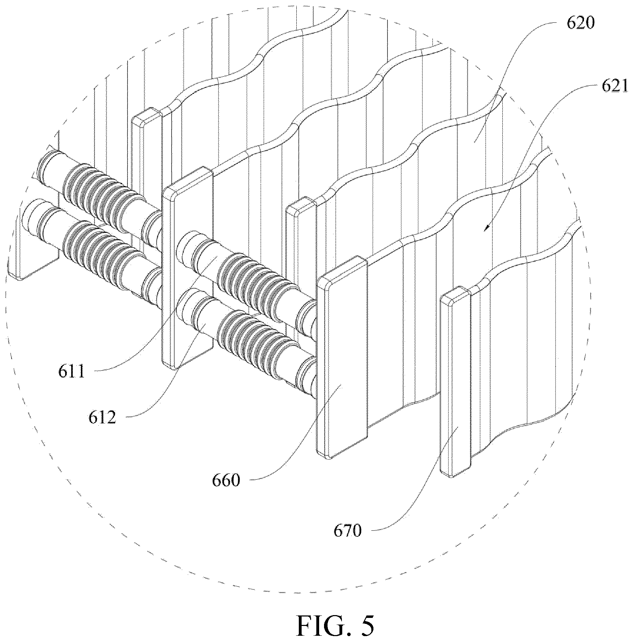

As shown in FIGS. 5 to 9, in one or more embodiments of the present disclosure, the liquid cooling assembly 600 further includes a first port connector 660. The first port connector 660 is installed at a connection position between the liquid cooling pipe 620 and the coolant conveying pipe 610. The liquid cooling pipe 620 is communicated with the coolant conveying pipe 610 by the first port connector 660.

In one or more embodiments of the present disclosure, the liquid cooling pipe 620 and the first port connector 660 are made of plastic.

In one or more embodiments of the present disclosure, the liquid cooling pipe 620 and the first port connectors 660 are made of plastic, so that an overall weight of the battery module can be reduced. The plastic material has insulation performance, so that the outer side surface of the liquid cooling pipe 620 does not need to be coated with a thermally conductive insulating material. This reduces processes of production, and also prevents a problem of uneven coating on the arc concave surface 621 of the liquid cooling pipe 620.

As shown in FIGS. 5 to 9, in one or more embodiments of the present disclosure, the coolant conveying pipe 610 includes a liquid inlet pipe 611 and a liquid outlet pipe 612. The liquid inlet pipe 611 and the liquid outlet pipe 612 are disposed on a side of the battery cell module 200. The liquid inlet pipe 611 and the liquid outlet pipe 612 are communicated with the liquid cooling pipe 620 through a same first port connector 660. The liquid inlet pipe 611 and the liquid outlet pipe 612 are connected to a same end of the liquid cooling pipe 620. The liquid inlet pipe 611 and the liquid outlet pipe 612 are connected to a same end of the liquid cooling pipe 620, so that a circulation loop of the coolant is formed in a liquid cooling pipe 620. After entering the liquid cooling pipe 620 from an end, the coolant flows along a length direction of the liquid cooling pipe 620, takes away heat of the battery cell 201, and then is discharged from a same end of the liquid cooling pipe 620. This extends a flowing path of the coolant in the liquid cooling pipe 620 and improves utilization of the coolant.

In one or more embodiments of the present disclosure, the liquid cooling pipe 620 is provided with a first coolant channel 622 and a second coolant channel 623. The first coolant channel 622 and the second coolant channel 623 are distributed in a radial direction of the liquid cooling pipe 620. The first coolant channel 622 is communicated with the second coolant channel 623 at an end of the liquid cooling pipe 620 away from the first port connector 660. The coolant enters the first coolant channel 622 from the liquid inlet pipe 611 through the first port connector 660, and flows to an end of the liquid cooling pipe 620 away from the first port connector 660 along the first coolant channel 622. After reaching an end of the liquid cooling pipe 620 away from the first port connector 660, the coolant enters the second coolant channel 623, flows towards an end of the liquid cooling pipe 620 close to the first port connector 660, and finally is discharged into the liquid outlet pipe 612 through the first port connector 660.

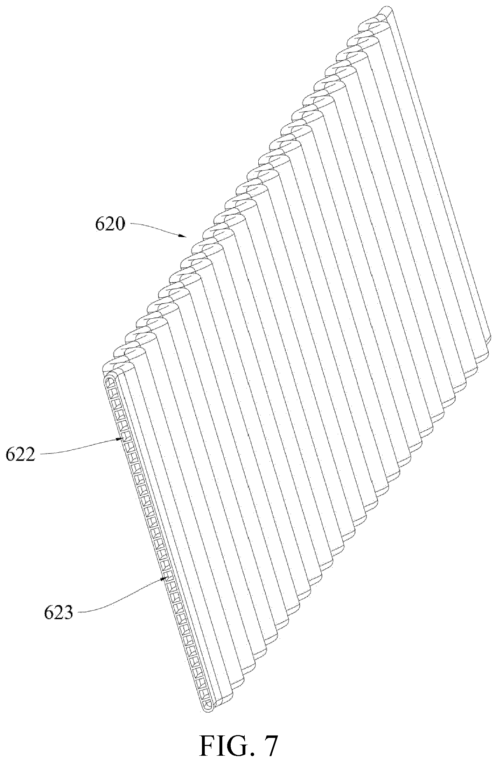

As shown in FIG. 7, in one or more embodiments of the present disclosure, multiple first coolant channels 622 are longitudinally distributed, and the multiple first coolant channels 622 are arranged side by side.

In one or more embodiments of the present disclosure, multiple second coolant channels 623 are longitudinally distributed, and the multiple second coolant channels 623 are provided side by side.

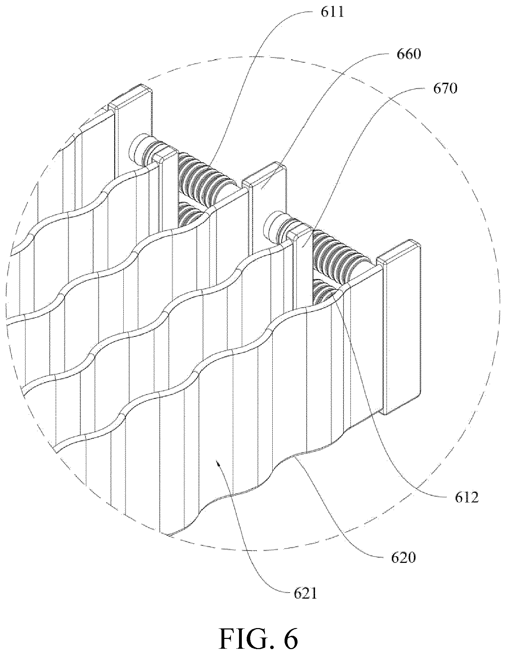

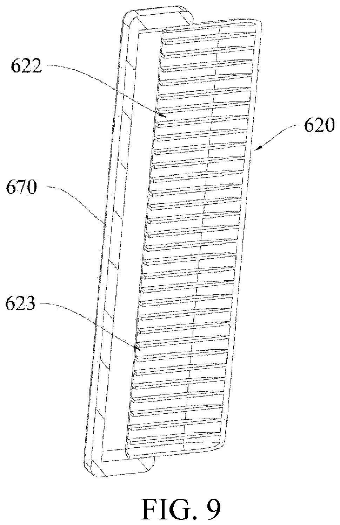

As shown in FIGS. 6 and 9, in one or more embodiments of the present disclosure, the first port connector 660 is connected to a first end of the liquid cooling pipe 620. The liquid cooling assembly 600 further includes a second port connector 670. The second port connector 670 is connected to a second end of the liquid cooling pipe 620. The first coolant channel 622 is communicated with the liquid inlet pipe 611 through the first port connector 660. The second coolant channel 623 is communicated with the liquid outlet pipe 612 through the first port connector 660. The first coolant channel 622 is communicated with the second coolant channel 623 at the second end of the liquid cooling pipe 620 through the second port connector 670.

In one or more embodiments of the present disclosure, the second port connector 670 seals the second end of the liquid cooling pipe 620, and communicate the first coolant channel 622 with the second coolant channel 623.

In one or more embodiments of the present disclosure, the second port connector 670 is made of a plastic material.

In one or more embodiments of the present disclosure, the first port connector 660, the second port connector 670, and the liquid cooling pipe 620 are all made of a material including a mixture of polypropylene and polystyrene.

Alternatively, the materials of the first port connector 660, the second port connector 670, and the liquid cooling pipe 620 are one of polyethylene terephthalate, polyethylene, or polystyrene.

As shown in FIGS. 1 to 6, in one or more embodiments of the present disclosure, both the liquid inlet pipe 611 and the liquid outlet pipe 612 are a corrugated pipe. Both the liquid inlet pipe 611 and the liquid outlet pipe 612 are in an interference fit with the first port connector 660.

In one or more embodiments of the present disclosure, corrugated pipe are used to facilitate adjustment of a distance between adjacent liquid cooling pipes 620, thereby adapting to battery cells 201 with different diameters.

Specifically, the thermally conductive double-sided adhesive tape 630 has good thermally conductive effect and good stability. The thermally conductive double-sided adhesive tape 630 is used for adhering the liquid cooling pipe 620 and the battery cell 201. This can improve security and stability of the battery module.

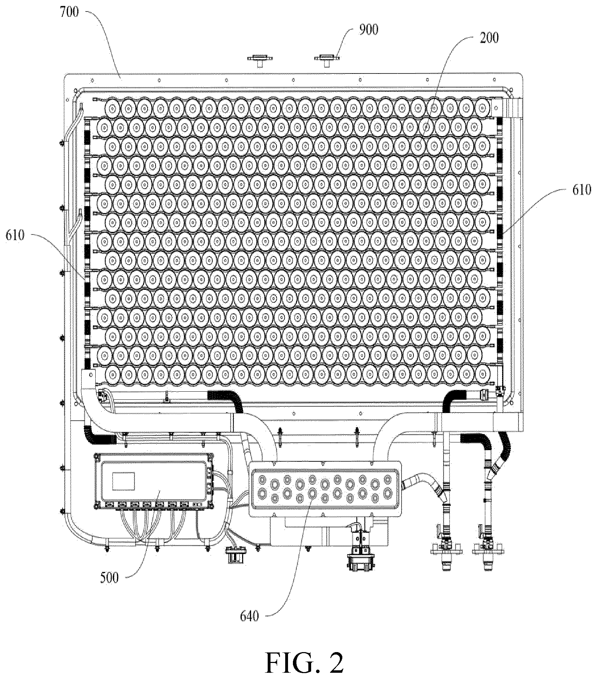

Refer to FIGS. 1 and 2, based on the liquid cooling system according to one or more embodiments, a battery module according to the present disclosure includes the liquid cooling system according to any one of the foregoing embodiments, a Cells Contact System 300 (CCS), and a Battery Management System 500 (BMS). The battery cell connection system 300 is provided on a top of the battery cell module 200. The battery cell connection system 300 is electrically connected to the battery cells 201. The battery cell control system 500 is installed in an inner cavity of the housing 100. The battery cell control system 500 is electrically connected to the battery cell 201.

In one or more embodiments of the present disclosure, the housing 100 is provided with an inner cavity. The battery cell module, the battery cell connection system 300, the BDU 400, the battery cell control system 500, and the liquid cooling assembly 600 are all provided in the inner cavity of the housing 100.

The BDU 400 is configured to control processes of power off and on, pre-charging, and charging of a high-voltage electrical loop. The Cells Contact System (CCS) 300 is configured to connect battery cells 201 in series and/or in parallel. The Battery Management System 500 (BMS) is configured to manage and maintain a working state of each battery cell 201, to prevent the battery module from overcharging and overdischarging, prolong service life of the battery module, and monitor a status of the battery module.

The BDU 400 and the battery cell control system 500 are provided in different regions of the inner cavity of the housing 100. The BDU 400 and the battery cell control system 500 are separately connected to the housing 100 using screws.

A module tray 700, a first structural adhesive (not shown), and a second structural adhesive 800 are further provided inside the housing 100.

As shown in FIG. 2, the battery cell module 200 is provided on the module tray 700. A pressure relief chamber is further provided inside the housing 100. The pressure relief chamber is disposed on a side of the module tray 700 away from the battery module. The housing 100 is connected to a pressure relief valve 900. The pressure relief valve 900 is communicated with the pressure relief chamber.

The first structural adhesive is filled between the housing 100 and the battery module, so as to fix a position of the battery module. The second structural adhesive 800 is provided on a top of the battery cell connection system 300. The second structural adhesive 800 is disposed between the battery cell connection system and the housing 100. The second structural adhesive 800 is used to fix a position of the battery cell connection system 300.

In the present disclosure, the thermally conductive double-sided adhesive tape 630 is provided between the arc concave surface 621 of the liquid cooling pipe 620 and the battery cell 201. firmness and closeness of the fitting between the liquid cooling pipe 620 and the battery cell 201 are improved. This ensures that the liquid cooling pipe 620 and the outer side surface of the battery cell 201 are maintained to be fitted, to improve efficiency of cooling the battery cell 201, and ensure assembly of the battery cell 201 in the battery module is firm. In addition, by using the thermally conductive double-sided adhesive tape 630, procedures of application and solidification of adhesive in a production process are not required. This can effectively prevent a problem of adhesive overflow in the production process and prevent a problem of a difficulty in cleaning adhesives after the liquid cooling system is contaminated by the adhesive. The thermally conductive double-sided adhesive tape 630 is used for bonding. This cancels steps of application and solidification of adhesive in the production process, improves production efficiency, reduces a quantity of devices used in the production process, and reduces production cost

In the present disclosure, the thermally conductive double-sided adhesive tape is provided between the arc concave surface of the liquid cooling pipe and the battery cell. The thermally conductive double-sided adhesive tape is a solid adhesive tape. The liquid cooling pipe and the battery cell are bonded by the thermally conductive double-sided adhesive tape. In a processing process, there is no conversion process of the thermally conductive double-sided adhesive tape from a liquid state to a solid state. Therefore, a problem of adhesive overflow in the production process is effectively prevented. In this way, a problem of a difficulty in cleaning adhesives after the liquid cooling system is contaminated by the adhesives is prevented, and procedures of application and solidification of adhesive in the production process are canceled, thereby improving production efficiency, reducing a quantity of devices used in the production process, and reducing production costs.

The detailed implementations of the present disclosure are described in detail above. The foregoing implementations disclosed in the present disclosure are merely preferred implementations of the present disclosure. Those skilled in the art may also make various modifications and improvements without departing from the idea of the present disclosure. Such modifications and improvements fall within the scope defined in the claims of the present disclosure.

## Claims

1. A liquid cooling system, comprising:
a housing;
a battery cell module comprising a plurality of battery cells, wherein the battery cell module is disposed in an inner cavity of the housing; and
a liquid cooling assembly provided inside the housing, wherein the liquid cooling assembly comprises one or more coolant conveying pipes and one or more liquid cooling pipes, each of the coolant conveying pipe is communicated with at least one of the liquid cooling pipes, an outer side surface of at least one of the liquid cooling pipes is an arc concave surface, the arc concave surface matches an outer side surface of at least one of the battery cells, the arc concave surface is connected to the outer side surface of at least one of the battery cells, a thermally conductive double-sided adhesive tape is provided at a connection position between the arc concave surface and at least one of the battery cells, and a thickness of the thermally conductive double-sided adhesive tape ranges from 0.01 mm to 10 mm.

2. The liquid cooling system according to claim 1, wherein the thermally conductive double-sided adhesive tape is a solid flexible adhesive tape, a side of the thermally conductive double-sided adhesive tape is adhered to the arc concave surface, another side of the thermally conductive double-sided adhesive tape is adhered to part of the outer side surface of at least one of the battery cells, and the thermally conductive double-sided adhesive tape has a thermal conductivity greater than 1 W/mK and a bonding strength greater than 0.9 megapascal.

3. The liquid cooling system according to claim 1, wherein the liquid cooling assembly comprises two coolant conveying pipes and two liquid cooling pipes, the two coolant conveying pipes are respectively provided on two sides of the battery cell module, the two liquid cooling pipes are respectively provided on two sides of at least one of the battery cells, and the two liquid cooling pipes are respectively communicated with the two coolant conveying pipes.

4. The liquid cooling system according to claim 1, wherein the liquid cooling assembly further comprises one or more first port connectors, at least one of the first port connectors is disposed at a connection position between at least one of the liquid cooling pipes and at least one of the coolant conveying pipes, at least one of the liquid cooling pipes is communicated with at least one of the coolant conveying pipes through at least one of the first port connectors, and the liquid cooling pipes and the first port connectors are made of plastic.

5. The liquid cooling system according to claim 4, wherein at least one of the coolant conveying pipes comprises a liquid inlet pipe and a liquid outlet pipe, the liquid inlet pipe and the liquid outlet pipe are disposed on a same side of the battery cell module, the liquid inlet pipe and the liquid outlet pipe are communicated with at least one of the liquid cooling pipes through at least one of the first port connectors, and the liquid inlet pipe and the liquid outlet pipe are connected to a same end of at least one of the liquid cooling pipes.

6. The liquid cooling system according to claim 5, wherein at least one of the first port connectors is connected to a first end of at least one of the liquid cooling pipes, the liquid cooling assembly further comprises one or more second port connectors, at least one of the second port connectors is connected to a second end of at least one of the liquid cooling pipes, a first coolant channel and a second coolant channel are provided inside at least one of the liquid cooling pipes, the first coolant channel is communicated with the liquid inlet pipe through at least one of the first port connectors, the second coolant channel is communicated with the liquid outlet pipe through at least one of the first port connectors, and the first coolant channel and the second coolant channel are communicated at the second end of at least one of the liquid cooling pipes through at least one of the second port connectors.

7. The liquid cooling system according to claim 5, wherein the liquid inlet pipe and the liquid outlet pipe are a corrugated pipe, and the liquid inlet pipe and the liquid outlet pipe are in an interference fit with at least one of the first port connectors.

8. The liquid cooling system according to claim 1, wherein the liquid cooling system further comprises a battery disconnect unit, the battery disconnect unit is provided in the inner cavity of the housing and is electrically connected to each of the battery cells, the liquid cooling assembly further comprises a liquid cooling plate, the liquid cooling plate is provided on a top of the battery disconnect unit, and the liquid cooling plate is communicated with at least one of the coolant conveying pipes.

9. The liquid cooling system according to claim 8, wherein the liquid cooling assembly further comprises a thermally conductive insulating part, the liquid cooling plate is provided on the battery disconnect unit by the thermally conductive insulating part, and the thermally conductive insulating part is in contact with the liquid cooling plate and the battery disconnect unit.

10. The liquid cooling system according to claim 9, wherein the thermally conductive insulating part is made of silica gel, the liquid cooling plate is made of metal, and at least one of the coolant conveying pipes is welded to the liquid cooling plate.

11. A battery system, comprising:
a liquid cooling system, wherein the liquid cooling system comprises a housing, a battery cell module, and a liquid cooling assembly, the battery cell module comprises a plurality of battery cells, the battery cell module is provided in an inner cavity of the housing, the liquid cooling assembly is provided inside the housing, the liquid cooling assembly comprises one or more coolant conveying pipes and one or more liquid cooling pipes, at least one of the coolant conveying pipes is communicated with at least one of the liquid cooling pipes, an outer side surface of at least one of the liquid cooling pipes is an arc concave surface, the arc concave surface matches an outer side surface of at least one of the battery cells, the arc concave surface is connected to the outer side surface of at least one of the battery cells, a thermally conductive double-sided adhesive tape is provided at a connection position between the arc concave surface and at least one of the battery cells, and a thickness of the thermally conductive double-sided adhesive tape ranges from 0.01 mm to 10 mm;
a battery cell connection system provided on a top of the battery cell module and electrically connected to each of the battery cells; and
a battery cell control system provided in the inner cavity of the housing and electrically connected to each of the battery cells.

12. The battery system according to claim 11, wherein the thermally conductive double-sided adhesive tape is a solid flexible adhesive tape, a side of the thermally conductive double-sided adhesive tape is adhered to the arc concave surface, another side of the thermally conductive double-sided adhesive tape is adhered to part of the outer side surface of at least one of the battery cells, and the thermally conductive double-sided adhesive tape has a thermal conductivity greater than 1 W/mK and a bonding strength greater than 0.9 megapascal.

13. The battery system according to claim 11, wherein the liquid cooling assembly comprises two coolant conveying pipes and two liquid cooling pipes, the two coolant conveying pipes are respectively provided on two sides of the battery cell module, the two liquid cooling pipes are respectively provided on two sides of at least one of the battery cells, and the two liquid cooling pipes are respectively communicated with the two coolant conveying pipes.

14. The battery system according to claim 11, wherein the liquid cooling assembly further comprises one or more first port connectors, at least one of the first port connectors is disposed at a connection position between at least one of the liquid cooling pipes and at least one of the coolant conveying pipes, at least one of the liquid cooling pipes is communicated with at least one of the coolant conveying pipes through at least one of the first port connectors, and the liquid cooling pipes and the first port connectors are made of plastic.

15. The battery system according to claim 14, wherein at least one of the coolant conveying pipes comprises a liquid inlet pipe and a liquid outlet pipe, the liquid inlet pipe and the liquid outlet pipe are disposed on a sane side of the battery cell module, the liquid inlet pipe and the liquid outlet pipe are communicated with at least one of the liquid cooling pipes through at least one of the first port connectors, and the liquid inlet pipe and the liquid outlet pipe are connected to a same end of at least one of the liquid cooling pipes.
